# EUROPEAN PATENT SPECIFICATION

(11) **EP 4 017 946 B1**
(45) Date of publication and mention of the grant of the patent: **17.06.2026**
(21) Application number: 20854434.6
(22) Date of filing: 20.08.2020
(51) Int. Cl.: C10L 5/40, C10L 5/44, C10L 9/08, C10B 49/02, C10B 53/02, C10B 53/07

(54) **A PROCESS FOR SYNTHESIS OF HIGH FLUOROSCENCE, HIGH CALORIFIC VALUE MATERIAL FROM WASTE PLASTIC**
VERFAHREN ZUR HERSTELLUNG VON HOCHFLUORESZENTEM MATERIAL MIT HOHEM BRENNWERT AUS KUNSTSTOFFABFÄLLEN
PROCESSUS DE SYNTHÈSE D'UN MATÉRIAU À TENEUR ÉLEVÉE EN FLUOROSCENCE, À VALEUR CALORIFIQUE ÉLEVÉE À PARTIR DE DÉCHETS PLASTIQUES

(30) Priority: 20.08.2019 IN 201911033508
(43) Date of publication of application: 29.06.2022
(73) Proprietor: Chairman, Defence Research&Development Organisation, New Delhi 110011 (IN)
(72) Inventor: GROVER, Atul, Nainital Uttarakhand 263139 (IN); SINGH, Abhinav, Nainital Uttarakhand 263139 (IN); JOSHI, Piyush, Nainital Uttarakhand 263139 (IN); BALA, Madhu, Nainital Uttarakhand 263139 (IN)
(74) Representative: Eisenführ Speiser
(86) International application number: PCT/IN2020/050722
(87) International publication number: WO 2021/033203

(56) References cited:
- WO-A1-2016/070149
- AU-A1- 2012 203 711
- CN-A- 108 277 029
- JP-A- 2005 187 940
- KR-A- 20190 049 659
- US-A1- 2016 039 680
- BOUMANCHAR, I. ET AL.: "Effect of materials mixture on the higher heating value: Case of biomass, biochar and municipal solid waste", WASTE MANAGEMENT, vol. 61, 21 November 2016 (2016-11-21), pages 78 - 86, XP029945456, DOI: 10.1016/j.wasman. 2016.11.01 2
- CHATTOPADHYAY, J. ET AL.: "Thermogravimetric characteristics and kinetic study of biomass co-pyrolysis with plastics", KOREAN J. CHEM. ENG., vol. 25, 2008 - 1 September 2009 (2009-09-01), pages 1047 - 1053, XP055802119, DOI: https://doi.org/10.1007/s11814-008-0171-6.
- XUE, YUA N ET AL.: "Thermochemical conversion of organic and plastic waste materials through pyrolysis", 2017, XP055802122, Retrieved from the Internet <URL:https://lib.dr.iastate.edu/etd/16242> DOI: https://doi.org/10.31274/etd-180810-5871

## Description

### FIELD OF INVENTION

The present invention relates to thermochemical conversion of a combination of non biodegradeable plastic waste, mixed with organic wastes available in various ratios like 3:1, 3:2, 4:1, 4.5:1. 5:1, 5:2, 5.5:1, 6:1, 7:1, 7:2 and 8:1 w/w into a bio-plastic char (BPC) having high fluorescence and calorific value.

### BACKGROUND OF THE INVENTION

Solid waste management is one of the top priority areas of the present day of both developed and developing nations alike. Wastes may originate from industries, agriculture, households, etc. and are categorized accordingly. It may include bio-degradable substances like paper, biomass, etc., other degradable substances like glass, metals, etc. and non-bio-degradable materials like plastics. The relative abundance of these materials may vary from place to place.

Plastic wastes have become ubiquitous and obnoxious to deal with. In the absence of effective measures ensuring its recycling, huge amounts of plastic wastes accumulate in landfills, unattended litter elsewhere in lands, water bodies and eventually end up in oceans. In recent years, it has been recognized as a threat for both land as well as marine animals (Borrelle et. al. 2017). An estimated twelve million tons of plastic is added to oceans annually (Jambeck et. al. 2015). India, standing amongst top 20 plastic polluters of the world (worldatlas.com) generates around 56 lakh tonnes of plastic waste annually (NDTV report, dated 25^{th} April 2017).

Eventually, plastic also enters our food chain, with serious health implications. Potentially, it can alter the gene expression, various tissues, and may even cause death of the organisms (Rochman et. al. 2016). Microplastics (plastic particles of size < 5mm) can impair reproduction and development (Sussarellu et. al. 2016). In addition, these plastic wastes can clog water channels, triggering floods. Further, as fossil fuels are used in the manufacture of plastic, its general usage also threatens depletion of an energy source for the entire mankind. Life cycle assessments (LCA) suggest consumption of about 0.5 MJ energy in production and transportation per high density poly-ethylene (HDPE) bag (Nolan et al. 2002). Conversely, one gallon of gasoline would be required to manufacture only about 70 HDPE plastic bags.

Organic wastes on the other hand are easy to manage, and are otherwise also degraded in the nature. However, when the amount of organic wastes from agriculture, agro-industries or wetlands is huge, merely leaving it to the nature to degrade it is not sufficient, and mankind tends to get rid of it through non-sustainable means. Burning of agricultural stubble, a major pollutant, is an example.

The wastes, however, can be processed thermo- or bio-chemically to yield certain chemicals or heat in a relatively more sustainable way. Many of the end products of these reactions can further serve as fuels to a number of other reactions. Combustion, pyrolysis, gasification, liquefaction, biomethanation, carbonization, torrefaction, biomethanation, etc. are examples of the reactions which can potentially convert wastes into wealth. Methane, methanol, ethanol, higher hydrocarbons, bio diesel, hydrocarbon derivatives carbon Nanomaterials, hydrogen, or bio-hydrogen are some of the likely end products of these reactions.

KR 2019 0049659 A discloses a process for producing a char from mixtures of vegetable waste and plastic waste. CN 108 277 029 A discloses a process for producing a char from municipal solid waste. Both processes involve pyrolysis steps in pressurized reactors in the presence of steam.

Therefore, the object of the present invention is to obviate the drawbacks of the prior art by providing a novel process for thermochemical conversion of a combination of non-bio-degradable plastic waste, mixed with organic wastes. Therefore, the present invention disclosed in the specification provides a unique process wherein a combination of plastic and organic wastes in ratios ranging from 3:1 to up to 8:1 w/w is thermochemically degraded to yield a solid cake, which shows high fluorescence to the magnitude of up to 800 nm at 532 nm excitation laser and a calorific value of more than 1100 kcal/kg.

### SUMMARY OF THE INVENTION

In order to achieve the aforesaid objective, the present invention provides a process of converting a combination of plastic waste and organic waste mixed in ratios 3:1, 3:2, 4:1, 4.5:1. 5:1, 5:2, 5.5:1, 6:1, 7:1, 7:2 and 8:1 w/w by combustion with air cut off for periods ranging between 2 to 16 hours yielding a solid substance (henceforth called bio-plastic char (BPC)), as defined in the claims.

Said BPC shows following characteristics-

| | |
|---|---|
| Fluorescence | On excitation with 532 nm laser, e⁻ does not return to |
| | resting stage till 680 nm (Figure 1) |
| Compressive Strength | 85.6 MPa |
| | 2.68 @ 1 KHz; |
| | 2.59 @ 1 MHz |
| Dielectric Strength | 6500 volts / 0.001" |
| Calorific value | 47-49 MJ/Kg by Combustion Thermochemistry |

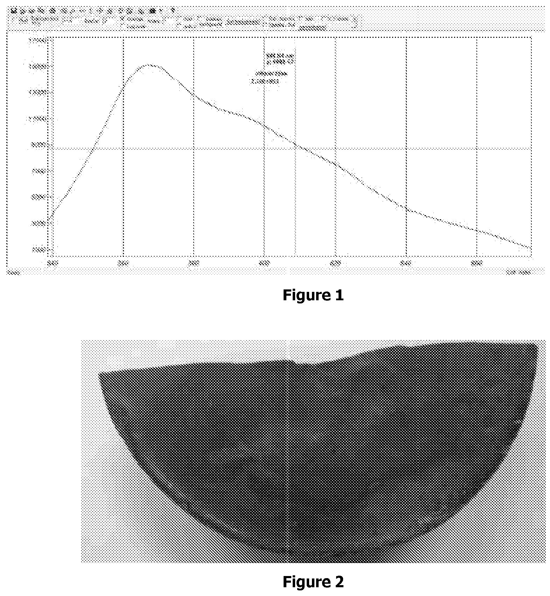

The BPC (Fig. 2) prepared by the process of present invention is suitable for making electronic devices like batteries, coating materials for Solar PV or can be used in construction application, aviation industry, shipping industries, fabricating interiors of aircrafts and automobiles, radars, etc.

### BRIEF DESCRIPTION OF ACCOMPANYING DRAWINGS

The following drawings form part of the present specification and are included to further illustrate aspects of the present invention. The invention may be better understood by reference to the drawings in combination with the detailed description of the specific embodiments presented herein.

It is to be noted, however, that the appended drawings illustrate only typical embodiments of the present subject matter, and are therefore, not to be considered for limiting of its scope, for the subject matter may admit to other equally effective embodiments.
**Figure 1** illustrates Raman spectral graph of the material obtained on thermochemical degradation of polythene waste mixed with dried algal mass.
**Figure 2** illustrates raw BPC obtained on continuing the process for 16 h. The raw material used for this process was polythene waste mixed with dried algal mass.
**Figure 3** illustrates the customized fixed bed reactor used in the present invention.

These and other features of the invention will become apparent from a consideration of the detailed description.

### DETAILED DESCRIPTION OF THE INVENTION

The following description is provided to assist in a comprehensive understanding of exemplary embodiment of the invention. It includes various specific details to assist the understanding but these are to be regarded as merely exemplary.

Accordingly, those of ordinary skill in the art will recognize that various changes and modifications of the embodiments described herein can be made without departing from the scope of the invention. In addition, description of well-known functions / constructions is omitted for clarity and consciousness.

The terms and words used in the following description and claim are not limited to the bibliographical meanings, but are merely used by the inventor to enable a clear and consistent understanding of the invention. Accordingly, it should be apparent to those skilled in the art that the following description of exemplary embodiments of the present invention are provided for illustration purpose and not for the purpose of limiting the invention as defined by the appended claims and their equivalents.

It is to be understood that the singular forms "a," "an," and "the" include plural referents unless the context clearly dictates otherwise.

Features that are described and/or illustrated with respect to one embodiment may be used in the same way or in a similar way or more other embodiment and/or in combination with or instead of the features of other embodiments.

It should be emphasized that the term "comprises/comprising" when used in this specification is taken to specify the preference of stated features, integers, steps or components but does not preclude the presence or addition of one or more other features, integers, steps or components or groups thereof.

Those skilled in the art will be aware that the invention described herein is subject to variations and modifications, other than those specifically described.

The present invention is not to be limited in scope by the specific embodiments described herein, which is intended for the purposes of exemplification only. Functionally-equivalent products, compositions, and methods are clearly within the scope of the invention, as described herein.

The present invention provides a process for treatment of waste plastic and biomass for obtaining a solid mass (bio-plastic char, BPC) which has variety of potential end uses. The term "bio-plastic char" or BPC refers to a mixture of plastic and organic wastes that have been treated at high temperature for certain amount of time.

The process involves the segregating the raw material for the reaction, i.e., the plastic wastes among the household wastes collected on daily basis from the residential colony. The plastic waste can exemplarily (but not limited) be polythene bags, HDPE, LDPE, etc. Organic wastes were typically generated in the adjoining field. Organic waste can be dried algal mass, dried parthenium mass, dried camelina mass, pine needles or farm weeds, or any other plant biomass, agro-waste, forest waste, etc. The plastic wastes were dried under the sun prior to their utilization for thermochemical conversion. Likewise, the organic wastes were also dried under the sun by spreading them on a plastic sheet. Sun drying continued for 2-3 days.

The ratio at which plastic wastes and organic wastes are mixed can range as 3:1, 3:2, 4:1, 4.5:1. 5:1, 5:2, 5.5:1, 6:1, 7:1, 7:2 and 8:1.

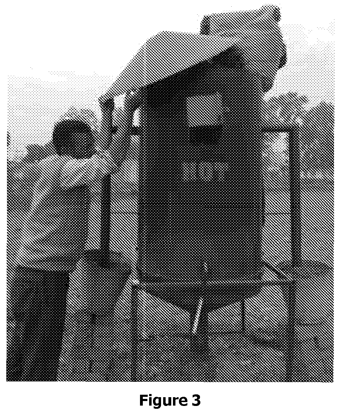

The fixed bed reactor used in the present invention was customized (Fig. 3). The mixture was fired, and was allowed to burn for 5 min initially. Air availability to the reactor was cut off by shutting the vent used for putting in biomass. Occasionally the contents in the chamber were stirred using a handle provided outside. This allowed complete utilization of the waste products. The reaction continued for periods varying between 2 hrs to 16 hrs. At the end of which, different reaction components including the bio-plastic crude, bio-plastic condensate and bio-plastic char (BPC) were collected.

BPC has been characterized for physical and chemical properties, as below-

| | |
|---|---|
| Tap density | 0.667-0.699 kg/m³ |
| Fluoroscence | On excitation with 532 nm laser, e⁻ does not come back to resting stage till 680 nm (Figure 1) |
| Compressive Strength | 85.6 MPa |
| Dielectric Constant | 2.68 @ 1 KHz; |
| | 2.59 @ 1 MHz |
| Dielectric Strength | 6500 volts / 0.001" (255.9 MV/m) |
| Calorific value | 47-49 MJ/Kg by Combustion Thermochemistry |
| Shelf life | Not attacked by funqus or bacteria till 390 days |

The present invention will now be explained with the help of the following experiments, however; the scope of the invention should not be limited to said example and experiments. It is to be understood that the above described embodiments are merely illustrative principles of the present invention and that many variations may be devised by those skilled in the art without departing from the scope of the present invention.

### COMPARISON OF BIO-PLASTIC CHAR WITH OTHER AVAILABLE MATERIALS OF COMPARABLE CHARACTERISTICS

### Fluorescence

When a material is electronically excited by absorption of a quantum of electromagnetic radiation and subsequently emits light, the phenomenon is called as fluoroscence. It appears, when a material absorbs electromagnetic radiation and subsequently releases the extra energy as emission radiation, by entering into the so-called "excited state". When the atom returns to the ground state, photon(s) is emitted. The wavelength of excitation radiation is typically shorter than the wavelength of the emission radiation.

Fluorescence has a variety of commercial applications, like a fluorescent lamp uses mercury as the fluorescent material, which is used for lighting purposes. Fluorescence can be used in analytical chemistry, spectroscopy, bio-medical research, etc. Fluorescent dyes are immensely popular in biotechnology and bio-medical research.

Rhodamine B is one of the most popular fluorescent dye with λex between 259-542 and λem peak at 568 nm in ethanol (1.58 x 10⁻⁷mol/l) at 25 ⁰C (Kubin and Fletcher 1982). Other important fluorescent materials are quantum dots which are nano-scale semi-conducting devices, and their fluorescent quantum varies with the particle size. Compared to that the BPC reported in this claim on excitation at 532 nm, keeps emitting till 680 nm, with highest signal to noise (S/N) ratio counts near 565 nm. While rhodamine B and quantum dots are difficult and costly to prepare, the present material being made of wastes offers an attractive alternative.

### Compressive Strength

Compressive strength is the capacity of a material to withstand loads tending to reduce size. While, it alone is not sufficient to define the use of material, it may still be used as an indicator for the likely use of the material. Among the commonly occurring materials, porcelain has a compressive strength of 500 MPa, granite is having a compressive strength of 130 MPa, concrete is having 20-40 MPa, hard brick has a compressive strength of 80 MPa and ice has a compressive strength of 3 MPa. As the present material has chiefly been derived from used plastics, chiefly polyethene (high density polyethylene, HDPE; low density polyethylene, LDPE and Polyethylene tetraphthalate, PET), it is worthwhile to compare its compressive strength to different kinds of plastics. Compressive strength of material described here is 85.6 MPa, which is lesser than acrylic (95 MPa), Polyimide (150 MPa) and polyamide-imide (130 MPa), but higher than polycarbonate (PC; 70 MPa), HDPE (20 MPa), polypropylene (PP; 40 MPa), Polystyrene (PS; 70 MPa), Polyvinyl chloride (PVC; 15 MPa) and comparable to PET (80 MPa). Thus, the material can be used as an alternative to Acrylic and PET. Further, the material is being produced by recycling of wastes, there is appreciably much lesser cost input.

### Density

Density describes the utility of a material for lightweight applications. Tap density of the BPC was found to be ranging between 0.667 to 0.699 kg/m³. When compared with currently popular polymers for lightweight applications, it is significantly low. Some of the popular polymers have density as follows-

| | |
|---|---|
| Reinforced carbon fiber | - 0.91-1.20 kg/m³ |
| Reinforced glass fiber | - 1.26-1.54 kg/m³ |
| HDPE | - 0.94-0.97 kg/m³ |
| LDPE | - 0.92 kg/m³ |
| ABS | - 1.05 kg/m³ |
| PC | - 1.20 kg/m³ |
| PP | - 0.90 kg/m³ |
| PS | - 1.05 kg/m³ |
| PU | - 1.20 kg/m³ |
| PVC | - 1.39 kg/m³ |

### Dielectric properties

A dielectric material is an insulator that can be polarized by an applied electric field. However, while an insulator is an obstruction to electric current, a dielectric material is energy storing material. When a dielectric is placed in an electric field, electric charges slightly shift from their average equilibrium positions. Positive charges are displaced in the direction of the field and negative charges shift in the opposite direction, creating dielectric polarization. This creates an internal electric field that reduces the overall field.

Some experts define dielectric constant (κ) as the ratio of the permittivity of a substance to the permittivity of free space, i.e., extent to which a material concentrates electric flux. Value of dielectric constant for any material in vacuum would be one, and in real time conditions it would always be greater than one.

The BPC produced by us shows κ = 2.68 @ 1 KHz at room temperature (25 °C/77 ^{O}F), which is comparable to that displayed by paraffin (κ = 2.55), polyamide (κ = 2.55), polybutylene (κ = 2.2-2.3), polyethylene (2.2-2.4), polystyrene (κ = 2.60), but higher than polypropylene (κ = 1.50) and lower than polycarbonate (κ = 2.90), acetanilide (acrylic monomer; κ = 2.90), acrylic (2.7-4.5), PVC (2.8-4.5), and polyamide (κ = 2.8).

Dielectric strength for a material is the limit beyond which it would start conducting electricity. It becomes important for the applications where high voltages are expected, or when the thickness of the dielectric is very small. For the BPC we produced, the dielectric strength is 6500 V/0.001", i.e., 255.9 kV/mm, or 255.9 MV/m, which is much higher than materials like polystyrene (19.7-24 MV/m), polyethylene (19-160 MV/m), PVC (40MV/m), etc. with similar dielectric constant. In fact, for most plastics, it ranges between 15-24 MV/m (Shugg 1986). Most hydrocarbon monomers show dielectric strengths > 200 MV/m (Sharbaugh et al. 1956, Miller et al. 1985).

### Calorific value

Calorific value is the total energy produced by the combustion of a material. Algal biomass can potentially show a calorific value of >4,200 Kcal/Kg (Ghayal and Pandya 2013), which is estimated to be 17.6 MJ/kg, and is higher than the calorific value of wood (14 MJ/kg), but lower than that of hydrocarbons (ethylene- 26.8 MJ/kg, gasoline- 42 MJ/kg, diesel- 41.8 MJ/kg, methane- 50 MJ/kg). Among the plastics, the calorific values stand at 22.9, 23.8, 37.1, 38.6, 40.8 and 41 MJ/kg for PVC, PET, HDPE, PS, LDPE and PP, respectively. The bio-plastic char that we have defined here has a calorific value ranged 47-49 MJ/kg in subsequent experiments, and stands higher than the values of both algal biomass (17.6 MJ/kg) and plastics (22.9-41 MJ/kg).

### Energy economics of the process

Exemplarily, in one of the experiments, we used 4.4 Kg plastic material (Avg. CV 38.12 MJ/Kg), and 0.8 Kg dried algal mass (CV 17.6 MJ/Kg). As 0.5 Kg BPC was obtained, with net CV 24 MJ/Kg (Average value). In addition, approximately 5 Nm³ producer gas with minimum CV 4.60 MJ/Nm³, was released. The net efficiency of the system calculated as η= 100 * (CV of products x flow rate)/(CV of feed x feeding rate). In a 180 minute reaction in the batch made in an isolated system, the net flow rate of the gas and feeding rate was assumed to be unity, and the energy factor of amount feed and products was taken into consideration as net CV values in the above reaction. Therefore, the net efficiency of the process (η) turned out to be 25.85%. Energy was also released as heat, which too is recoverable and can be used for various applications in an integrated system designed to recover both gases as well as heat (so-called combined heat and power, CHP systems). Both producer gas and jacket heat can be utilized to power various energy intensive systems.

### Overall economics of the process

The waste plastics were segregated from household wastes, and algal mass was drawn from agricultural fields, again as a waste. Therefore, there was no net spending on the process. For the combustion of the material, effectively, there was no input cost, as the materials themselves were combustible. Therefore, the product has been obtained with zero input cost, and is a strong candidate for waste management.

### Commercial potential of the process/ end product

The process describes processing of combustible waste material, bulk of which is otherwise non degradable, and ends up in a material which is characterized by fluorescence, dielectric properties, compressive strength, and calorific value. The product generated from waste has following commercial applications:
a) Due to its fluorescence, matching with rhodamine B and quantum dots, it can be used for making fluorescent dyes.
b) Owing to the characteristic fluorescence spectrum, it can be used for light harvesting technologies such as photovoltaics, and hence can be used to make solar panels, solar cells, and even radar surfaces.
c) Due to its light weight but compressive strength, the material is useful for designing interiors of automobiles.
d) Due to the charge harvesting properties (dielectric properties), the material can be used for making capacitors and batteries.
e) Plastic can be recycled using the process described and can be utilized as an alternative to acrylic and PET.
f) Due to its calorific value, the material has potential to be utilized as a solid biofuel.

Although the invention has been described with reference to specific embodiments, present description should not be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the scope of the present invention as defined.

## Claims

1. A thermochemical conversion process of a combination of non biodegradeable plastic waste, mixed with organic wastes for obtaining bio-plastic char (BPC), comprising
- mixing the plastic wastes, and organic wastes in predetermined ratio;
- adding the mixture in the fixed bed reactor and firing for about 5 minute; followed by carrying out the process in the limited oxygen already present in the reactor as air;
- continuing the process for 2 to 16 hours;
- filtering the liquids formed during the reaction through a mesh fitted within the reactor;
- collecting the liquids, condensate and char, the solid mass.

2. The process as claimed in claim 1, wherein plastic wastes and organic wastes are mixed in ratios 3:1, 3:2, 4:1, 4.5:1. 5:1, 5:2, 5.5:1, 6:1, 7:1, 7:2 and 8:1 w/w.

3. The process as claimed in claim 1, wherein the plastic wastes is selected from the group comprising polythene, HDPE, LDPE.

4. The process as claimed in claim 1, wherein the organic wastes is selected from dried algal mass, dried parthenium mass, dried camelina mass, pine needles or farm weeds, or any other plant biomass, agro-waste, forest waste.

5. The process as claimed in claim 1, wherein the plastic wastes, and organic wastes are
dried under the sun for 2-3 days prior to their utilization for thermochemical conversion.

## Patentansprüche

1. Thermochemisches Umwandlungsverfahren einer Kombination aus nicht biologisch abbaubarem Kunststoffabfall, gemischt mit organischen Abfällen, zum Erhalten von Biokunststoffkohle (BPC), umfassend
- das Mischen der Kunststoffabfälle und der organischen Abfälle in einem vorgegebenen Verhältnis;
- das Einbringen der Mischung in den Festbettreaktor und das Erhitzen für etwa 5 Minuten; gefolgt von der Durchführung des Verfahrens in dem im Reaktor als Luft bereits vorhandenen begrenzten Sauerstoff;
- das Fortsetzen des Verfahrens für 2 bis 16 Stunden;
- das Filtrieren der während der Reaktion gebildeten Flüssigkeiten durch ein in dem Reaktor angebrachtes Sieb;
- das Sammeln der Flüssigkeiten, des Kondensats und der Kohle, der festen Masse.

2. Verfahren nach Anspruch 1, wobei Kunststoffabfälle und organische Abfälle in Gewichtsverhältnissen von 3:1, 3:2, 4:1, 4,5:1, 5:1, 5:2, 5,5:1, 6:1, 7:1, 7:2 und 8:1 gemischt werden.

3. Verfahren nach Anspruch 1, wobei die Kunststoffabfälle aus der Gruppe ausgewählt werden, die Polyethylen, HDPE und LDPE umfasst.

4. Verfahren nach Anspruch 1, wobei die organischen Abfälle aus getrockneter Algenmasse, getrockneter Parthenium-Masse, getrockneter Leindotter-Masse, Kiefernnadeln oder Unkraut, oder jeder anderen pflanzlichen Biomasse, landwirtschaftlichen Abfällen oder forstwirtschaftlichen Abfällen ausgewählt werden.

5. Verfahren nach Anspruch 1, wobei die Kunststoffabfälle und die organischen Abfälle vor ihrer Verwendung für die thermochemische Umwandlung 2-3 Tage lang in der Sonne getrocknet werden.

## Revendications

1. Procédé de conversion thermochimique d'une combinaison de déchets plastiques non biodégradables mélangés avec des déchets organiques pour obtenir du charbon bioplastique (BPC), comprenant:
- mélanger les déchets plastiques et les déchets organiques dans un rapport prédéterminé;
- introduire le mélange dans le réacteur à lit fixe et chauffer pendant environ 5 minutes ce qui est suivi par la mise en oeuvre du procédé dans l'oxygène en quantité limitée déjà présent dans le réacteur sous forme d'air;
- continuer le procédé pendant 2 à 16 heures;
- filtrer les liquides formés pendant la réaction, à travers un tamis placé dans le réacteur;
- collecter les liquides, le condensat et le charbon, la masse solide.

2. Procédé selon la revendication 1, dans lequel des déchets plastiques et des déchets organiques sont mélangés dans des rapports pondéraux de 3 : 1, 3 : 2, 4 : 1, 4,5 : 1, 5 : 1, 5 : 2, 5,5 : 1, 6 : 1, 7 : 1, 7 : 2 et 8 : 1.

3. Procédé selon la revendication 1, dans lequel les déchets plastiques sont choisis dans le groupe constitué par le polyéthylène, le PEHD et le PEBD.

4. Procédé selon la revendication 1, dans lequel les déchets organiques sont choisis parmi la masse d'algues séchées, la masse de parthenium séchée, la masse de caméline séchée, les aiguilles de pin ou les adventices agricoles, ou toute autre biomasse végétale, déchets agricoles ou déchets forestiers.

5. Procédé selon la revendication 1, dans lequel les déchets plastiques et les déchets organiques sont séchés au soleil pendant 2 à 3 jours avant leur utilisation pour la conversion thermochimique.
